# DEMANDE DE BREVET EUROPEEN

(11) **EP 2 068 565 A1**
(43) Date de publication de la demande: **10.06.2009**
(21) Numéro de dépôt: 07301647.9
(22) Date de dépôt: 07.12.2007
(51) Int. Cl.: H04N 7/16

(54) **Module d'identité d'abonné et serveur de diffusion associé, adaptés pour gérer des programmes d'une durée non déterminée**

(71) Demandeur: GEMPLUS, 13420 Gémenos (FR)
(72) Inventeur: Praden, Anne-Marie, 13122 Ventabren (FR)

(57) **Abrégé**

L'invention concerne un service à valeur ajoutée appliqué à la diffusion de programmes ou contenus de type vidéo, plus particulièrement à la télévision mobile (Mobile TV). L'invention favorise la continuité de service lors de la diffusion de programmes dont la durée n'est pas prévisible et dont la diffusion a notamment fait l'objet d'un achat de type Pay-Per-View.

## Description

L'invention concerne un service à valeur ajoutée appliqué à la diffusion de programmes ou contenus de type vidéo, plus particulièrement à la télévision mobile (Mobile TV). Par l'intermédiaire de ce type de technologie, un utilisateur d'un téléphone mobile peut par exemple regarder un programme vidéo sur l'écran de son téléphone et l'écouter éventuellement au moyen d'une oreillette ou paire de lunettes communiquant, à l'aide d'une liaison filaire ou sans fil, avec ledit téléphone.
Pour offrir ce type d'application, des opérateurs de télécommunication utilisent des ressources dédiées telles un serveur de diffusion de vidéos (*TV broadcast server*), un réseau de radio télécommunication mobile et/ou réseau de diffusion, des serveurs de contenus et un serveur distant pour contenir des secrets.
Les opérateurs utilisent, pour pouvoir facturer ledit service, un objet personnel pour authentifier l'utilisateur désirant bénéficier d'un service de télévision mobile. L'objet personnel est un module d'identité d'abonné, préférentiellement sous la forme d'une carte à puce, connue sous l'acronyme UICC (*Universal Integrated Circuit Card*). Cette carte supporte une application de type SIM (*Subscriber Identity Module*) en liaison avec le terminal de communication mobile. Le terminal de communication mobile se connecte à un réseau généralement de type GSM/GPRS (*Global System for Mobile communications* / *General Packet Radio Service*).
Le module d'identité d'abonné peut également se présenter sous la forme d'une carte de type MMC (*MultiMedia Card*) ou SD (*Secure Digital*) voire sous la forme d'un dongle ou clé connectée à un terminal au moyen, par exemple, du protocole USB (*Universal Serial Bus*). Ledit module, quel que soit son type, possède les données personnelles nécessaires pour que l'utilisateur puisse bénéficier du service de diffusion de programmes vidéo.

L'invention s'applique notamment, et de manière non limitative, aux réseaux de diffusion DVB (*Digital Video Broadcasting*)*,* DMB (*Digital Multimedia Broadcasting*), ISDB-T (*Integrated Services Digital Broadcasting-terrestrial*) et MBMS (*Mobile Broadcast Multicast Service*). Les utilisateurs propriétaires de terminaux idoines reçoivent des programmes vidéo diffusés via de tels réseaux. Lesdits programmes sont diffusés sans distinction à l'ensemble de la flotte de terminaux. Si des programmes sont libres de droits (ou diffusés en clair) chacun peut les visualiser. D'autres programmes, dits payants, nécessitent un abonnement individuel par utilisateur. Si un utilisateur n'a pas souscrit un tel abonnement, il ne sera pas en mesure de visualiser le programme payant.

Les programmes vidéo sont diffusés sous la forme de flux continus, élaborés par un ou plusieurs fournisseurs de contenus. Le flux audio et le flux vidéo sont synchronisés au moyen de marqueurs temporels (*Timestamps*).

Le service de diffusion peut toutefois être partiellement personnalisé au moyen notamment de l'ESG (*Electronic Service Guide*)*.* Via l'ESG, on peut communiquer des informations caractérisant le programme vidéo, informations dont certaines sont affichables, sous la forme de menus, à l'écran du terminal. Il est en outre possible de transmettre, grâce à l'ESG, des informations tenant compte de la localisation géographique de l'utilisateur (dates de concerts par exemple). L'ESG apporte ainsi une interactivité aux programmes. L'utilisateur peut obtenir des informations complémentaires sur les programmes ou même être amené à voter durant un programme voire réaliser un achat électronique. Il peut également spécifier la langue des programmes qu'il souhaite visualiser. L'ESG est également un moyen de promotion intéressant pour l'opérateur de diffusion. L'interactivité peut également être véhiculée dans d'autres messages diffusés, dits messages de notification.

Les contenus ou programmes dits payants sont transmis chiffrés. Une clé de trafic, permettant de déchiffrer le contenu, est transmise conjointement avec ledit contenu. La clé de trafic est variable dans le temps. Elle est, elle-même, chiffrée par le fournisseur de contenus. Pour déchiffrer la clé de trafic, et ainsi déchiffrer le contenu, le module d'identité d'abonné de l'utilisateur comporte une ou plusieurs clés de déchiffrement, dites clés de service. Pour disposer des clés de service, il est nécessaire que ledit utilisateur ait souscrit un abonnement.
L'abonnement peut être de différentes natures. Il peut être mensuel ou basé sur une période temporelle plus courte ou plus longue. L'utilisateur peut également faire le choix d'une formule de type « Pay-per-View » pour laquelle il paie pour visualiser un programme particulier. Il existe d'autres formules comme l'achat de jetons consommés au fur et à mesure durant le temps de visualisation. La clé de service associée à un service de type « pay-per-view » est nommée PEK (*Program Encryption Key*). La clé de service associée à une durée d'abonnement est nommée SEK (*Service Encryption Key*). Les clés de service sont généralement communiquées via le réseau d'un opérateur de télécommunication, propriétaire du module d'identité de l'utilisateur. Les clés de service peuvent également être diffusées par le réseau de diffusion de contenu ou encore transmises en mode point à point sur un réseau de type WIFI (*Wireless Fidelity*) ou ADSL (*Asymetric Digital Subscriber Line*). Les clés de services reflètent la capacité de l'utilisateur à bénéficier de la visualisation et l'écoute de contenus.

Plus particulièrement, dans le cas d'un achat de programmes (de type *Pay-Per-View*), l'utilisateur-abonné reçoit du serveur de diffusion, une clé PEK associée à une période de validité égale à la durée du programme. Ainsi, prenons l'exemple d'une rencontre de football. La durée règlementaire d'une rencontre de football est égale à 90 minutes. Plus précisément, la durée règlementaire correspond à deux périodes de 45 minutes, séparées par une troisième de 15 minutes. Durant cette troisième période, dite mi-temps, les joueurs se reposent et les entraîneurs, des équipes de football, peaufinent leurs stratégies. Dans le cadre de certaines compétitions, il est impératif qu'une équipe soit victorieuse. Un score de parité n'est pas acceptable. A l'issue des deux périodes de temps de jeu de 45 minutes, les deux équipes doivent s'affronter durant deux nouvelles périodes, dites périodes de prolongation, de 15 minutes chacune. Il n'existe généralement pas de période séparant lesdites deux nouvelles périodes. Les équipes se contentent simplement de changer de position de jeu. A l'issue de ces deux périodes de prolongation, si aucune équipe n'a pris l'avantage, il est prévu une dernière période qui est décisive : les joueurs doivent tirer au but à tour de rôle, jusqu'à ce qu'un des joueurs rate son tir et condamne ainsi son équipe au détriment de l'autre. Dans ce type de compétition, il n'est donc pas possible de connaître à priori la durée du programme. D'autres exemples pourraient être considérés, comme des débats ou émissions culturelles, dont la durée réelle peut être plus ou moins bien délimitée et prédéterminée. Ce type de programme pose des problèmes aux opérateurs. En effet, si l'opérateur décide de « surdimensionner » la période de validité, il risque « d'offrir » gracieusement des minutes d'un autre programme. Inversement, une durée trop courte et stricte risque de pénaliser l'abonné en le privant de la conclusion de son programme. En général, l'opérateur « accorde » gracieusement quelques minutes additionnelles. Si l'on reprend l'exemple de la rencontre de football, il ne peut toutefois anticiper et gérer les périodes de prolongation voire la période décisive. Pour diffuser une rencontre de football, les opérateurs dimensionnent généralement, selon l'art antérieur, une période de validité de 115 minutes, augmentée de quelques minutes. Les périodes de prolongation sont considérées dès lors comme un programme distinct de celui correspondant aux temps de jeu règlementaire. A la fin du temps règlementaire, les abonnés désirant visualiser les périodes de prolongation doivent se « ruer » sur le clavier de leur terminal, acheter la période additionnelle, patienter durant la réception d'une clé PEK supplémentaire ou de la réception d'une mise à jour de la période de validité de ladite clé, pour ensuite visualiser le programme. Si le programme est suivi par un grand nombre d'abonnés, le réseau utilisé pour recevoir les messages LTKM véhiculant les clés PEK / SEK et les périodes de validité, peut être saturé, et des minutes précieuses sont loupées pour l'abonné, furieux après son opérateur de l'avoir ainsi privé du dénouement.

L'invention vise à résoudre les inconvénients de l'art antérieur en offrant une solution simple, mise en oeuvre principalement au niveau du module d'identité d'abonné en liaison avec le terminal d'un utilisateur. L'invention favorise ainsi la continuité de service lors de la diffusion de programmes dont la durée n'est pas prévisible et dont la diffusion a fait l'objet d'un achat de type Pay-Per-View.

A cette fin, il est prévu tout d'abord, un module d'identité d'un abonné à un service de diffusion de programmes payants, ledit module étant destiné à être intégré ou mis en liaison avec un terminal, lesdits programmes étant diffusés sous la forme d'au moins un message de contenu chiffré et d'au moins un message de clé, ledit au moins un message de clé véhiculant notamment un marqueur temporel et une valeur encodée d'une clé de trafic permettant audit terminal de déchiffrer lesdits messages de contenu chiffré,
ledit module comportent :
- une mémoire pour mémoriser et délivrer conjointement une clé de service et une période de validité associée à ladite clé de service;
- un moyen décodeur de clé pour déduire, de la valeur encodée en utilisant ladite clé de service, la valeur de la clé de trafic ;
- un moyen de contrôle de validité pour délivrer, au moyen décodeur de clé, la clé de service si, et seulement si, le marqueur temporel est compris dans la période de validité de ladite clé de service ;
- un moyen répartiteur pour recevoir ledit au moins un message de clé, extraire et transmettre notamment le marqueur temporel, la valeur encodée de la clé de trafic, respectivement au moyen contrôleur de validité et au moyen décodeur de clé ;
ledit module d'identité d'abonné étant caractérisé en ce que :
- le moyen répartiteur est adapté pour extraire et transmettre au moyen contrôleur de validité, une information d'extension de période de validité, contenue dans ledit au moins un message de clé, attestant que le programme est une extension de programme ;
- le moyen contrôleur de validité est adapté pour interpréter ladite information d'extension de période de validité et délivrer la clé de service indépendamment de la valeur du marqueur temporel si, et seulement si, ladite information atteste que le programme est une extension de programme.

En variante, le moyen répartiteur dudit module d'identité d'abonné peut être adapté pour extraire et transmettre au moyen contrôleur de validité, une valeur d'un marqueur temporel étendu, contenue dans ledit au moins un message de clé. De même, le moyen contrôleur de validité peut être adapté pour délivrer la clé de service si, et seulement si, :
i. la valeur du marqueur temporel étendu est compris dans la période de validité de ladite clé de service et;
ii. une information d'extension de période de validité est conjointement transmise, avec la valeur dudit marqueur temporel étendu, au moyen contrôleur de validité.

Selon une alternative, le moyen répartiteur est adapté pour extraire et transmettre au moyen contrôleur de validité, une valeur d'une période de validité étendue contenue dans ledit au moins un message de clé. Dans ce cas, le moyen contrôleur de validité est conjointement adapté pour délivrer la clé de service si, et seulement si, :
i. la valeur du marqueur temporel est comprise dans la période de validité étendue et;
ii. une information d'extension de période de validité est conjointement transmise, avec la valeur de ladite période de validité étendue, au moyen contrôleur de validité.

Selon cette variante, le moyen répartiteur peut en outre être adapté pour extraire et transmettre, au moyen contrôleur de validité, une valeur d'une période de validité initiale contenue dans ledit au moins un message de clé. Dans ce cas, le moyen contrôleur de validité peut être également adapté pour délivrer la clé de service si, et seulement si, :
i. la valeur du marqueur temporel est comprise dans la période de validité étendue et;
ii. une information d'extension de période de validité est conjointement transmise, avec la valeur de ladite période de validité étendue, au moyen contrôleur de validité et;
iii. ladite période de validité intiale est au moins comprise dans la période de validité.

L'invention concerne par ailleurs, un terminal pour visualiser un contenu diffusé au moyen d'un réseau de diffusion pour télévision mobile, si celui-ci intègre un module d'identité tel que décrit précédemment.

L'invention concerne en outre un serveur de programmes payants diffusés au moyen d'un réseau de diffusion comprenant un moyen encodeur d'un contenu sonore et/ou visuel utilisant :
- une première clé de chiffrement pour chiffrer ledit contenu et délivrer au moins un message de contenu chiffré ;
- une seconde clé de chiffrement pour chiffrer ladite première clé de chiffrement et délivrer au moins un message de clé ;
caractérisé en ce que le moyen encodeur ajoute, dans ledit au moins un message de clé, une information d'extension de période de validité attestant que le programme diffusé est une extension de programme.

En variante, le moyen encodeur du serveur selon l'invention, ajoute dans ledit au moins un message de clé, une valeur d'un marqueur temporel étendu, si, et seulement si, ledit au moins un message de clé comporte une information d'extension de période de validité attestant que le programme diffusé est une extension de programme et en ce que ladite valeur du marqueur temporel étendu est comprise dans une période de validité associée à la seconde clé de chiffrement.

Selon une alternative, le moyen encodeur du serveur ajoute dans ledit au moins un message de clé, une période de validité étendue, si, et seulement si, ledit au moins un message de clé comporte une information d'extension de période de validité attestant que le programme diffusé est une extension de programme et en ce que la valeur du marqueur temporel est comprise dans ladite période de validité étendue.

Selon cette alternative, ledit moyen encodeur peut ajouter, en outre, dans ledit au moins un message de clé, une période de validité initiale, si, et seulement si, ledit au moins un message de clé comporte une information d'extension de période de validité attestant que le programme diffusé est une extension de programme.

D'autres caractéristiques et avantages apparaîtront plus clairement à la lecture de la description qui suit et à l'examen des figures qui l'accompagnent parmi lesquelles :
- la figure 1 présente un système connu de télévision mobile ;
- la figure 2 présente un système de télévision mobile selon l'invention ;
- la figure 3 décrit un message STKM selon l'art antérieur et selon l'invention ;
- la figure 4a précise la description d'un module d'identité selon deux modes de réalisation ;
- la figure 4b précise la description d'un module d'identité selon un troisième mode de réalisation ;
- la figure 4c précise la description d'un module d'identité selon un quatrième mode de réalisation.

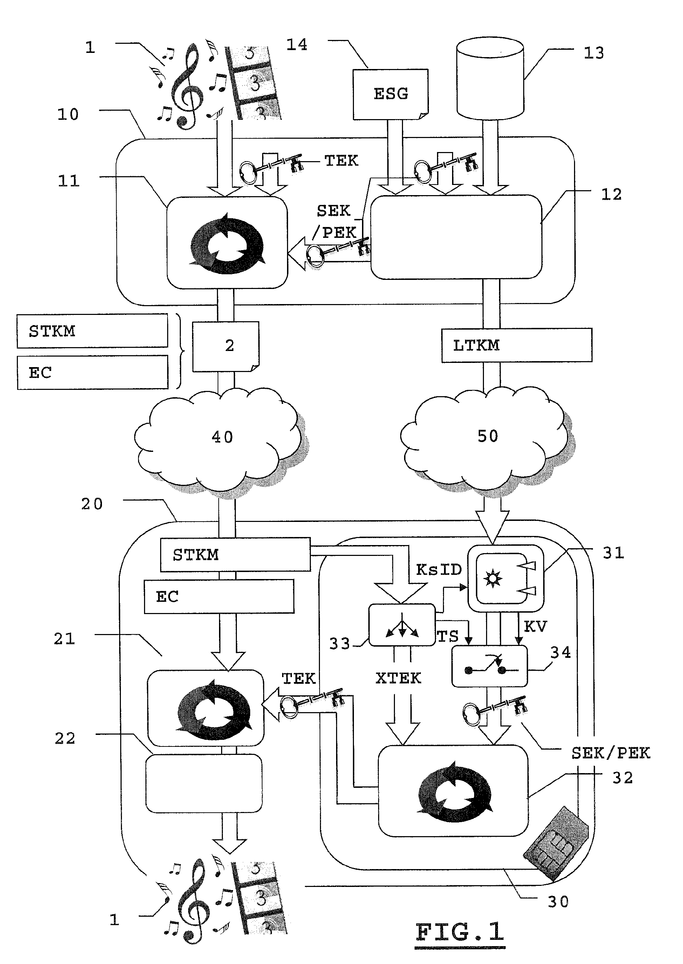

La figure 1 présente un système connu de télévision mobile. Les contenus payants 1 sont diffusés depuis un serveur 10. Les contenus 1 sont préalablement encodés au moyen d'un encodeur 11. Les contenus encodés 2 sont diffusés au travers d'un réseau de diffusion 40 de type DVB-H. Pour cela, l'encodeur 11 délivre des messages de contenu chiffré EC. L'encodeur 11 délivre en outre, associés audits messages de contenu chiffré, des messages STKM (*Short-Term Key Messages*) contenant notamment la valeur chiffrée XTEK d'une clé de trafic TEK (Traffic Key). La clé de trafic est une clé de déchiffrement qui sera utilisée in fine par le terminal 20 de l'abonné pour permettre la visualisation et l'écoute du contenu diffusé 1. La valeur XTEK véhiculée par les messages STKM est également encodée au moyen notamment d'une clé de service SEK (*Service Encryption Key*) ou PEK (*Program Encryption Key*).
La clé de chiffrement de contenu (donc la clé de trafic TEK associée) évolue régulièrement dans le temps. La clé SEK ou PEK évolue selon une période temporelle supérieure à celle de la clé TEK.
Les contenus diffusés via le réseau 40 sont réceptionnés par le terminal 20 d'un utilisateur ayant souscrit un abonnement pour bénéficier du service de télévision mobile. Le terminal 20 comporte, ou est en liaison avec un module d'identité d'abonné 30. Le module 30 se présente, de préférence, sous la forme d'une carte à puce de type UICC. Il pourrait être, en variante, totalement intégré au terminal. Le module 30 comporte une unité de traitement (non représentée sur la figure 1). Le module 30 comporte en outre une mémoire 31 dont l'accès en lecture et en écriture est réglementé. La mémoire 31 mémorise les valeurs de la clé SEK ou PEK. Cette clé est transmise au module d'identité 30 (via le terminal 20) au travers du réseau de radiocommunication 50 au moyen de messages LTKM (*Long-Term Key Messages*). Lesdits messages sont délivrés et diffusés par le serveur 10. Ce dernier tient compte d'informations relatives à l'abonnement de l'abonné mémorisées par le moyen 13. Les messages LTKM sont préparés au niveau du serveur 10 par un moyen 12 gestionnaire des abonnements. Des éléments ESG (*Electronic Service Guide*) sont également diffusés par les moyens 12 et 50. En variante, des éléments ESG peuvent également être diffusés par le moyen 40.
Le terminal 20 décode les messages de contenu chiffrés EC, au moyen d'un moyen 21 décodeur de contenu. Le moyen décodeur 21 utilise une clé TEK de déchiffrement de contenu, dite clé de trafic. Ladite clé TEK est délivrée par un moyen 32 décodeur de clé mis en oeuvre par le module d'identité 30. La clé TEK est déduite après décodage de la valeur XTEK contenus dans les messages STKM transmis par le terminal 20 au module d'abonné. Le moyen 32 décodeur de clé utilise, pour déduire la clé TEK, une clé SEK ou PEK dont la valeur est contenue dans une mémoire 31.
Les messages de contenu chiffré EC sont décodés par le moyen 21 décodeur de contenu et délivrés à des moyens 22 de rendus visuels et sonores du terminal afin que l'abonné puisse bénéficier du contenu payant 1 diffusé.

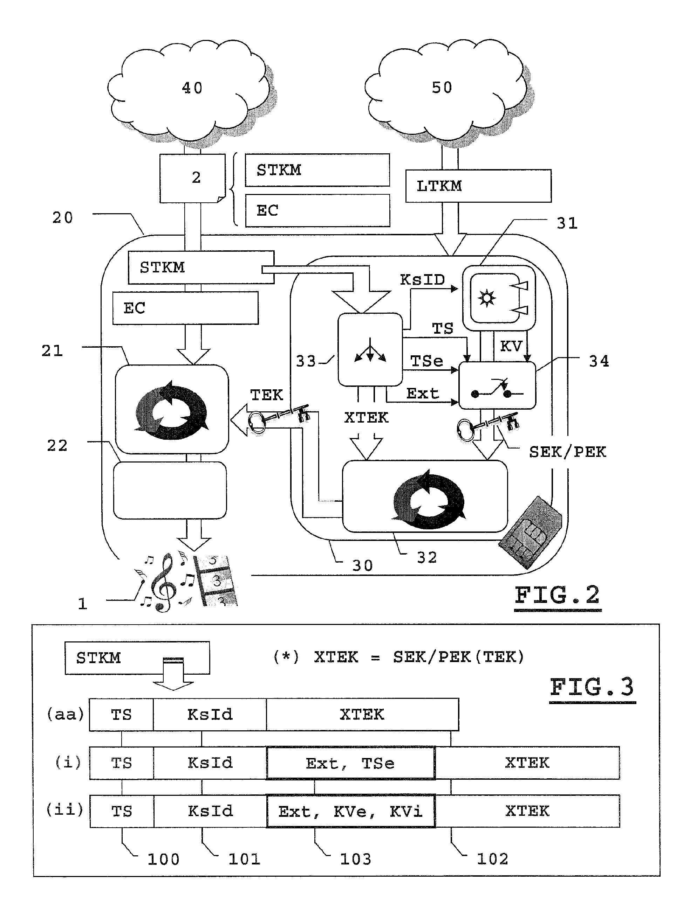

Il est possible de disposer d'une pluralité de clés PEK ou SEK dans la mémoire 31. Pour que le moyen décodeur 32 puisse déduire des messages STKM la clé TEK, lesdits messages STKM comportent en outre un identifiant KsID (*service Key Identïfier*) pour indiquer au module d'identité la clé PEK ou SEK qu'il doit utiliser. Cet identifiant KsID est décrit en liaison avec la figure 3 présentant la structure connue (a) d'un message STKM. Il correspond à l'élément 101 d'un message STKM. Cet identifiant est communiqué par l'intermédiaire éventuellement d'un moyen répartiteur 33 à la mémoire 31 pour que celle-ci délivre la clé SEK ou PEK désignée par l'identifiant. Le moyen répartiteur 33 peut se traduire sous la forme d'un bus unidirectionnel ou sous la forme de tout dispositif chargé de répartir le contenu des messages STKM aux différents constituants du module 30 d'identité de l'abonné.

Pour véhiculer la clé de trafic TEK préalablement encodée, un message STKM comporte un élément 102 contenant la valeur XTEK correspondant au résultat d'une fonction de chiffrement utilisant une clé SEK ou PEK. La notation « SEK/PEK(TEK) » représente ladite opération. L'élément 102 véhicule la valeur encodée XTEK de la clé TEK. Le moyen répartiteur 33, du module 30, transmet au décodeur 32 la valeur chiffrée XTEK de la clé TEK pour décodage.

Une clé SEK ou PEK peut être associée à une période de validité, notée KV. Cette information est transmise par le gestionnaire des abonnements 12 au travers du réseau 50 au moyen de messages LTKM. La période de validité est associée à une clé SEK ou PEK et est mémorisée dans la mémoire 31.
Un message STKM comporte, selon la figure 3, et selon l'art antérieur (aa), un élément 100 contenant la valeur d'un marqueur temporel. Pour pouvoir utiliser une clé SEK ou PEK et ainsi déduire une clé TEK, la valeur TS du marqueur temporel doit être comprise dans la période de validité associée à la dite clé SEK ou PEK. En liaison avec la figure 1, un moyen 34 contrôleur de validité, compris dans le module 30, permet ainsi de délivrer au moyen décodeur 32 la clé SEK ou PEK uniquement dans le cas ou la valeur TS du message STKM est comprise dans la période de validité de la clé SEK ou PEK.
Si la valeur TS n'est pas comprise dans la période de validité KV, le moyen décodeur de clé 32 ne peut délivrer la clé TEK. Par conséquent, le moyen 21 décodeur de contenu, compris dans le terminal 20, ne peut déchiffrer les messages EC. Le programme ou contenu diffusé n'est pas délivré en clair à l'abonné par l'intermédiaire du moyen 22 du terminal 20, ledit moyen 22 étant chargé du rendu visuel et/ou sonore.

A titre d'exemple, selon l'art antérieur lorsqu'un abonné souhaite acheter la visualisation d'un programme particulier, par exemple une rencontre de football diffusée le 14 février 2007, de 21h00 à 22h45, le gestionnaire 12 des abonnements délivre un message LTKM véhiculant une clé PEK associée à une période de validité comprise du 14 février 2007, 21h00 au 14 février 2007, 22h45.

Pour ne pas trop pénaliser ses abonnés, l'opérateur accorde quelques minutes à titre gracieux pour que l'abonné ne rate pas la fin du match en cas d'arrêts de jeu. Pour cela la période de validité peut être « surdimensionnée » et se terminer le 14 février 2007, 22h50.
Pour appréhender éventuellement une période additionnelle correspondant aux périodes de prolongation, l'opérateur prévoit soit un programme distinct soit une mise à jour éventuellement payante de la période de validité de la clé de service.

L'abonné doit effectuer ainsi une gestion fastidieuse et risquée pour pouvoir bénéficier de l'intégralité de la rencontre de football.

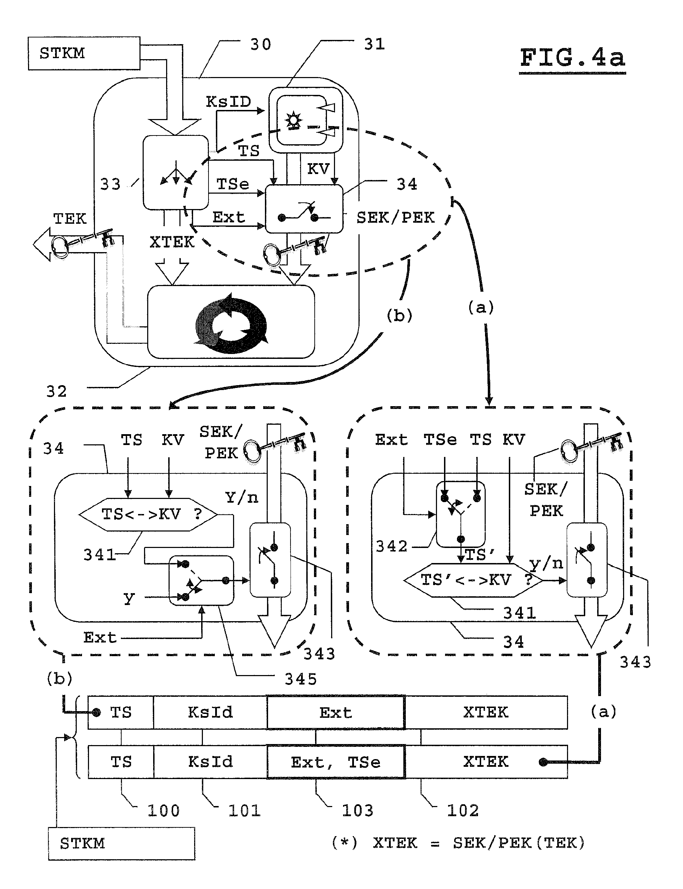

L'invention propose de résoudre cet inconvénient en permettant de s'affranchir de toute gestion individualisée au niveau du serveur 10.
L'invention propose:
- en liaison avec la figure 3, d'enrichir le contenu des messages STKM ;
- en liaison avec les figures 2, 4a 4b, et 4c, d'adapter le module d'identité d'abonné 30 et plus précisément le moyen 34 de contrôle de validité pour qu'il tienne compte d'une extension « virtuelle » de la période de validité d'une clé de service.

L'abonné bénéficie de l'intégralité de la rencontre, sans même s'apercevoir que l'invention a été mise oeuvre. Il est ainsi affranchi de toute manipulation pour bénéficier de l'extension du programme.

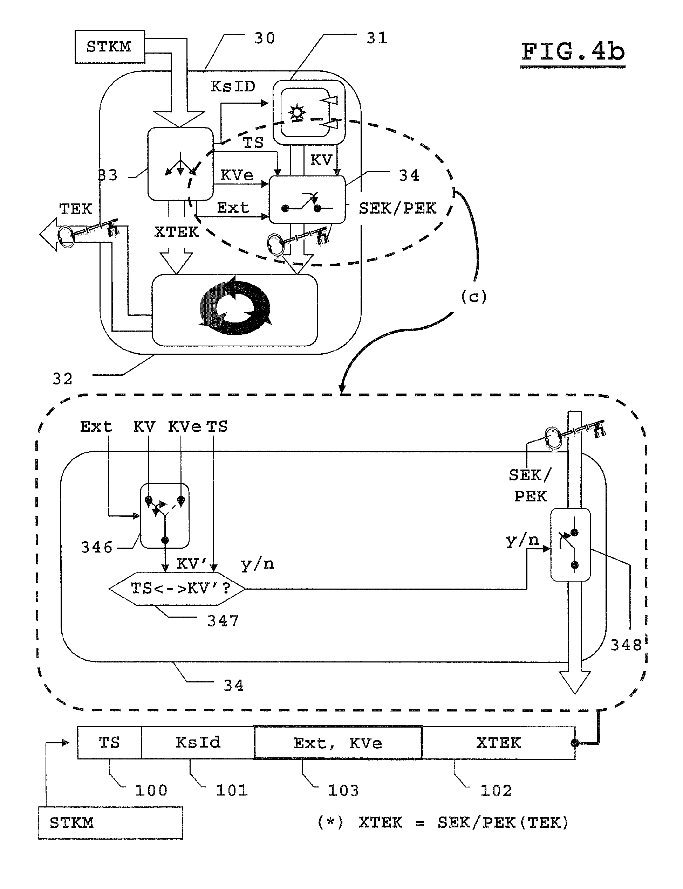

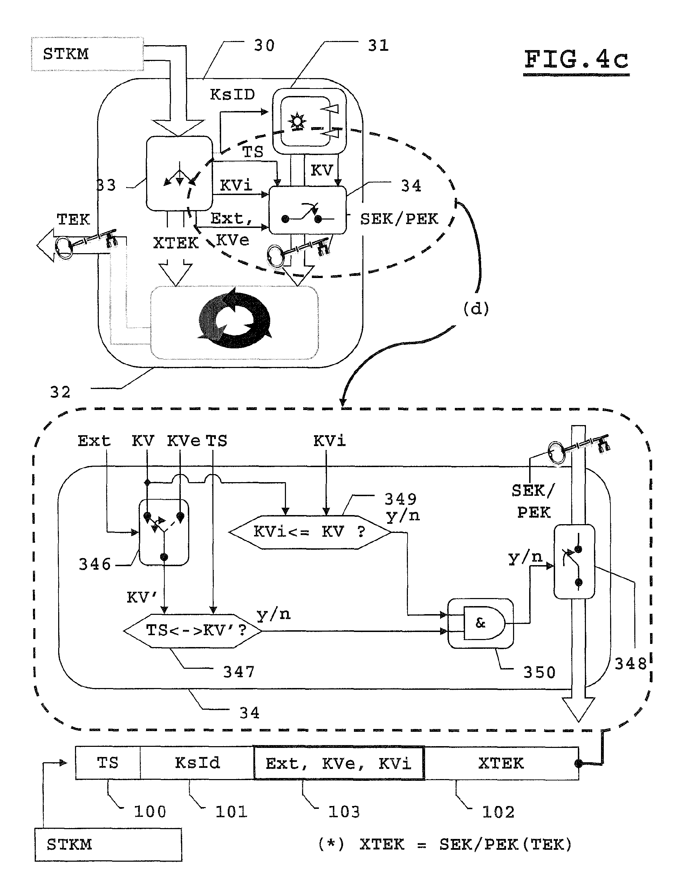

La figure 3 présente selon un mode de réalisation de l'invention un message (i) de type STKM enrichi. Il comporte ainsi un élément 103 supplémentaire et optionnel. L'élément 103 lorsqu'il est présent comporte une information « Ext » pour « Extension >> et éventuellement une information « TSe » pour « Time Stamp for extension ». La figure 3 présente en outre selon un autre mode de réalisation (ii) de l'invention, un message (i) de type STKM enrichi. Il comporte ainsi un élément 103 supplémentaire et optionnel. L'élément 103 lorsqu'il est présent comporte une information « Ext » pour « Extension », une information « KVe » pour « Key Validity for extension » et éventuellement une information « KVi » pour « initial Key Validity ».
Il existe plusieurs modes de réalisation pour mettre en oeuvre l'invention. Sans préjudice à la portée de l'invention, nous détaillerons, supra, quatre des modes de réalisation. Ainsi, nous analyserons à l'aide de la figure 4a, l'utilisation d'un message STKM enrichi selon le mode (i) et à l'aide des figures 4b et 4c, l'utilisation d'un message STKM enrichi selon le mode (ii).

En liaison avec la figure 2 et selon l'invention, le moyen répartiteur 33 du module d'identité d'abonné est adapté pour transmettre, outre l'identifiant KsID à la mémoire 31 et la valeur TS du marqueur temporel au moyen 34 contrôleur de validité, une première information « Ext » précisant que le message STKM est associé à une extension de programme. Cette information est issue de l'élément 103 du message STKM. Le moyen répartiteur 33 peut transmettre au moyen 34 contrôleur de validité, une valeur TSe, extraite optionnellement de l'élément 103. La valeur TSe correspond à la valeur d'un marqueur temporel étendu. Celle-ci a pour objet de se substituer, pour l'usage du moyen 34 contrôleur de validité, à la valeur du marqueur temporel TS, véhiculée dans le message STKM. La valeur TS reste utilisée pour maintenir la synchronisation des flux audio et vidéo.
Le moyen 34 contrôleur de validité a pour rôle de comparer la valeur TS de l'élément 100 à la période de validité KV de la clé SEK / PEK concernée. Selon l'invention, un premier mode de réalisation (b) consiste à adapter le moyen répartiteur 33 pour qu'il transmette l'information « Ext » au moyen 34 contrôleur de validité. Le moyen 34 contrôleur de validité est adapté pour que, s'il reconnaît une valeur caractéristique de l'information « Ext » issue de l'élément 103, il délivre la clé SEK / PEK quelle que soit la valeur TS par ailleurs transmise.
Selon un second mode de réalisation (a), le moyen 33 répartiteur transmet en outre une valeur TSe, associée à l'information « Ext ». Le moyen 34 contrôleur de validité est alors adapté pour qu'il utilise, en lieu et place de l'information TS, l'information TSe lors de la mise en oeuvre de l'opération de comparaison avec la période de validité de clé. L'information TSe est calculée par le serveur de diffusion 10 pour correspondre à une valeur comprise dans la période de validité de la clé SEK / PEK désignée, éventuellement au moyen de l'identifiant KsID. Pour mieux comprendre ces deux modes de réalisation, en liaison avec la figure 4a examinons successivement les modes (a) et (b).

Ainsi, selon un mode de réalisation préféré (a), le moyen 34 contrôleur de validité comporte un moyen interrupteur 343 pour délivrer, ou non, la clé SEK / PEK mise à disposition par la mémoire 31. Le moyen interrupteur 343 est commandé au moyen d'une information délivrée par un opérateur 341 dont la fonction consiste à comparer deux grandeurs. La première grandeur est TS', la seconde grandeur est la période de validité KV de la clé désignée. L'opérateur comparateur 341 délivre la valeur « y » si la valeur TS' est comprise dans la période de validité KV. Il répond « n » dans le cas contraire. Le moyen 343 interrupteur délivre la clé si, et seulement si, l'opérateur comparateur 341 délivre la valeur « y ». Pour élaborer la grandeur TS', le moyen 34 contrôleur de validité met en oeuvre un moyen décodeur 342. Ledit moyen 342 a pour fonction de délivrer en sortie une des deux valeurs dont il dispose en entrée. Le choix est fait en exploitant un paramètre. Ce paramètre reçoit la valeur « Ext ». Les valeurs TS et TSe sont respectivement acheminées à deux entrées dudit moyen décodeur 342. Ainsi, si la valeur « Ext » correspond à la valeur caractéristique d'une extension de programme, le moyen décodeur 342 délivre en sortie une valeur TS' égale à la valeur TSe. Dans le cas contraire, la valeur de sortie TS' correspond à la valeur TS. Dans le cas où la valeur TSe est déterminée pour être comprise dans la période de validité KV, on comprend que, peu importe la valeur TS, le moyen 34 contrôleur de validité délivre la clé SEK / PEK désignée. Prenons à nouveau l'exemple de notre rencontre de football. Durant le temps règlementaire (c'est à dire durant les 115 premières minutes) les messages STKM associés ne comporte pas d'élément 103 comprenant une information dont la valeur est caractéristique d'une extension de programme. Le moyen 34 contrôleur de validité utilise la valeur TS pour effectuer le test de validité (via le moyen comparateur 341). A l'issue des 115 premières minutes, si les messages STKM ne comportent pas un élément 103 comprenant une information « Ext » caractéristique d'une extension de programme, la valeur TS du marqueur temporel devient supérieure à la borne supérieure de la période de validité KV de la clé. L'opérateur 341 délivre une valeur de sortie différente de « y » et le moyen interrupteur 343 ne délivre plus la clé SEK/PEK. Le décodage de la clé de trafic TEK ne se fait plus et par là même, la restitution du programme déchiffré n'est plus rendue. Inversement selon l'invention, le serveur 10 délivre des messages STKM comprenant un élément 103 contenant une information « Ext », caractéristique d'une extension de programme. Le serveur délivre en outre, une valeur TSe comprise dans la période de validité. L'opérateur 341 délivre alors une valeur de sortie égale à « y » et le moyen interrupteur 343 délivre la clé SEK/PEK. Le décodage de la clé de trafic TEK peut être mise en oeuvre par le moyen 32 décodeur de clé. La restitution du programme déchiffré se poursuit par la mise en oeuvre, dans le terminal 20, du moyen 21 décodeur de contenu et du moyen 22, chargé du rendu visuel et sonore.

Selon un second mode de réalisation (b), le moyen 34 contrôleur de validité comporte un moyen 343 interrupteur pour délivrer, ou non, la clé SEK / PEK mise à disposition par la mémoire 31. Le moyen 343 interrupteur est commandé au moyen d'une information délivrée par un moyen décodeur 345. La fonction dudit moyen décodeur 345 consiste à délivrer en sortie une des deux valeurs dont il dispose en entrées. Le choix est fait en exploitant un paramètre. Le paramètre reçoit la valeur « Ext ». La première entrée reçoit une valeur « y ». La seconde entrée reçoit la sortie d'un moyen comparateur 341. La fonction dudit moyen comparateur 341 consiste à comparer deux grandeurs. La première grandeur est TS, la seconde grandeur est la période de validité KV de la clé désignée. L'opérateur comparateur 341 délivre la valeur « y » si la valeur TS est comprise dans la période de validité KV. Il répond « n » dans le cas contraire. Le moyen 343 interrupteur délivre la clé si, et seulement si, le moyen décodeur 345 délivre la valeur « y ». Dans le cas où le paramètre du moyen décodeur 345 reçoit la valeur « Ext », on comprend que, peu importe la valeur TS, le moyen 34 contrôleur de validité délivre la clé SEK / PEK désignée. Dans le cas contraire, le moyen 34 contrôleur de validité teste, comme selon l'art antérieur, la pertinence du marqueur TS au regard de la période de validité de la clé SEK/PEK désignée. Il met en oeuvre le moyen comparateur 341, pour cela. Prenons à nouveau l'exemple de notre rencontre de football. Durant le temps règlementaire (c'est à dire durant les 115 premières minutes) les messages STKM associés ne comporte pas d'élément 103 comprenant une information dont la valeur est caractéristique d'une extension de programme. Le moyen 34 contrôleur de validité utilise la valeur TS pour effectuer le test de validité (via le moyen comparateur 341). A l'issue des 115 premières minutes, si les messages STKM ne comportent pas un élément 103 comprenant une information « Ext » caractéristique d'une extension de programme, la valeur TS du marqueur temporel va être supérieure à la borne supérieure de la période de validité KV de la clé. L'opérateur 341 va délivrer une valeur de sortie différente de « y ». Cette valeur est transmise, via le moyen décodeur 345, au moyen interrupteur 343. Ce dernier ne délivre pas la clé SEK/PEK. Le décodage de la clé de trafic TEK ne se fait plus. La restitution du programme déchiffré est interrompue. Inversement selon l'invention, le serveur 10 délivre des messages STKM comprenant un élément 103 contenant une information « Ext », caractéristique d'une extension de programme. L'opérateur 345 délivre une valeur de sortie égale à « y ». Indépendament de la valeur délivrée par le moyen comparateur 341, le moyen interrupteur 343 délivre la clé SEK/PEK. Le décodage de la clé de trafic TEK peut être mis en oeuvre par le moyen 32 décodeur de clé. La restitution du programme déchiffré se poursuit par la mise en oeuvre, dans le terminal 20, du moyen 21 décodeur de contenu et du moyen 22 chargé du rendu visuel et sonore.

L'un des avantages du mode de réalisation (a) par rapport au mode de réalisation (b) réside dans la possibilité de borner l'extension virtuelle de la période de validité d'une clé SEK ou PEK. Bien que la présence de l'information « Ext » garantisse à elle seule l'extension de validité, le mode de réalisation (b) rend l'extension sans condition. En utilisant le marqueur temporel étendu TSe, l'opérateur peut gérer plus finement son offre d'extension. En effet, prenons comme exemple, une émission de télévision mobile sous la forme d'une série de débats contradictoires. Il est possible de découper l'offre en autant de sous-programmes que de débats et ainsi déterminer des périodes de validités différentes pour une même clé de service. Différents abonnés peuvent « acheter » un, deux ou plusieurs débats. La valeur TSe permet de désigner le débat concerné par l'extension offerte. Grâce à cette valeur TSe, il n'est pas nécessaire d'établir des clés de services SEK / PEK différentes par débat, seule alternative avec de mode de réalisation (b). En effet, selon le mode de réalisation (b), un abonné ayant souscrit une clé uniquement pour le premier débat (disposant donc d'une période de validité de clé dimensionnée en conséquence) pourrait non seulement bénéficier de l'offre d'extension pour le premier débat mais pour les prochains, gratuitement. Les solutions (a) ou (b) sont donc complémentaires.

Au niveau du serveur 10, il suffit de coder une extension de programme au moyen d'une clé SEK ou PEK associée à une période de validité donnée et de préciser dans l'élément 103 des messages STKM associés audit contenu, que le programme diffusé est de type « extension de programme ». Le cas échéant, les messages STKM comportent en outre le marqueur temporel étendu TSe dont la valeur est adaptée à la situation.

Par ailleurs, il est possible de prévoir un mode de réalisation du moyen 34 contrôleur de validité, que ce dernier puisse disposer des deux modes de fonctionnement décrits, en liaison avec la figure 4a. Ainsi, si une information « Ext » est présente dans l'élément 103, attestant que le message STKM est associé à une extension de programme, la présence ou l'absence de la grandeur TSe permet au dit moyen 34 d'adapter automatiquement sa configuration pour mettre en oeuvre la configuration (a) si le marqueur temporel étendu TSe est présent, ou la configuration (b) si seule l'information « Ext » est présente.

En liaison avec la figure 4b, selon un mode de réalisation (c), le moyen 34 contrôleur de validité comporte un moyen interrupteur 348 pour délivrer, ou non, la clé SEK / PEK mise à disposition par la mémoire 31. Le moyen interrupteur 348 est commandé au moyen d'une information délivrée par un opérateur comparateur 347 dont la fonction consiste à comparer deux grandeurs. La première grandeur est une valeur KV', la seconde grandeur est la valeur TS du marqueur temporel. L'opérateur comparateur 347 délivre la valeur « y » si la valeur TS est comprise dans la période de validité KV'. Il répond « n » dans le cas contraire. Le moyen interrupteur 348 délivre la clé si et seulement si l'opérateur comparateur 347 délivre la valeur « y ». Pour élaborer la grandeur KV', le moyen 34 contrôleur de validité, met en oeuvre un moyen décodeur 346. Ledit moyen 346 a pour fonction de délivrer en sortie une des deux valeurs dont il dispose en entrée. Le choix est fait en exploitant un paramètre. Ce paramètre reçoit la valeur « Ext ». Les valeurs KV et KVe sont respectivement acheminées à deux entrées dudit moyen décodeur 347. Ainsi, si la valeur « Ext » correspond à la valeur caractéristique d'une extension de programme, le moyen décodeur 347 délivre en sortie une valeur KV' égale à la valeur KVe. Dans le cas contraire, la valeur de sortie KV' correspond à la valeur KV. Dans le cas où la valeur TS est comprise dans la période de validité KVe, on comprend que, peu importe la valeur KV, le moyen 34 contrôleur de validité délivre la clé SEK / PEK désignée. Prenons à nouveau l'exemple de notre rencontre de football. Durant le temps règlementaire (c'est à dire durant les 115 premières minutes) les messages STKM associés ne comportent pas d'élément 103 comprenant une information dont la valeur est caractéristique d'une extension de programme. Le moyen 34 contrôleur de validité utilise les valeur TS et KV pour effectuer le test de validité (via le moyen comparateur 347). A l'issue des 115 premières minutes, si les messages STKM ne comportent pas un élément 103 comprenant une information « Ext » caractéristique d'une extension de programme, la valeur TS du marqueur temporel devient supérieure à la borne supérieure de la période de validité KV de la clé. L'opérateur 347 délivre une valeur de sortie différente de « y » et le moyen interrupteur 348 ne délivre plus la clé SEK/PEK. Le décodage de la clé de trafic TEK ne se fait plus et par là même, la restitution du programme déchiffré n'est plus rendue. Inversement selon l'invention, le serveur 10 délivre des messages STKM comprenant un élément 103 contenant une information « Ext », caractéristique d'une extension de programme. Le serveur délivre en outre, une période Kve plus étendue que la période initialement prévue (potentiellement égale à KV). L'opérateur 347 délivre alors une valeur de sortie égale à « y » et le moyen interrupteur 348 délivre la clé SEK/PEK. Le décodage de la clé de trafic TEK peut être mise en oeuvre par le moyen 32 décodeur de clé. La restitution du programme déchiffré se poursuit par la mise en oeuvre, dans le terminal 20, du moyen 21 décodeur de contenu et du moyen 22, chargé du rendu visuel et sonore.

En liaison avec la figure 4c, selon un mode de réalisation (d), le moyen 34 contrôleur de validité reprend les éléments 348, 347, 346, commentés en liaison avec la figure 4b. Le moyen 34 comporte en outre un opérateur comparateur 349 dont la fonction consiste à comparer deux grandeurs. La première grandeur est la période de validité KV délivrée par la mémoire 31. La seconde grandeur est une période KVi. Elle correspond à une période minimale pour pouvoir bénéficier de la visualisation du programme initialement prévue. Dans l'exemple de la rencontre de football, cette période KVi recouvre les périodes de temps réglementaire. La valeur KVi est véhiculée par les messages STKM. KVi est extraite par le moyen répartiteur 33 et communiquée au moyen 34 contrôleur de validité. Dans le cas général, la période KVi correspond, au moins, à la période KV. L'opérateur comparateur 349 délivre la valeur « y » si la valeur période KVi est au moins comprise dans la période KV. Il répond « n » dans le cas contraire. Les réponses respectives de l'opérateur comparateur 349 et de l'opérateur comparateur 348 sont préférentiellement mises à disposition d'entrées d'une porte logique 350, moyen chargé de délivrer en sortie, la réponse « y » si et seulement si les opérateurs 348 et 349 ont délivré la réponse « y ». Si l'un des opérateurs comparateurs 348 ou 349 répond « n », alors la porte 350 délivre la réponse « n ». La sortie de ladite porte commande le moyen interrupteur 348. Le moyen interrupteur 348 délivre la clé si, et seulement si, l'opérateur comparateur 347 et l'opérateur comparateur 349 délivrent la valeur « y ».
Le paramètre KVi permet de faire bénéficier à l'abonné de l'extension de période de validité uniquement dans le cas où ledit abonné a acheté au préalable et au minimum l'intégralité de la période KVi. KVi permet ainsi de limiter ladite extension de service.

Il est également possible de prévoir un mode de réalisation du moyen 34 contrôleur de validité, que ce dernier puisse disposer des deux modes (c) et (d) de fonctionnement décrits, en liaison avec les figures 4b et 4c. Ainsi, si une information « Ext » est présente dans l'élément 103, attestant que le message STKM est associé à une extension de programme, la présence ou l'absence de la grandeur KVi permet audit moyen 34 d'adapter automatiquement sa configuration pour mettre en oeuvre la configuration (d) si la période de validité initiale KVi est présente ou la configuration (c) si seules les informations « Ext » et KVe sont présentes.

De la même manière, il est possible que le moyen 34 contrôleur de validité puisse se muer en configuration (a), (b), (c) ou (d) en fonction des grandeurs extraites et mises à dispostion par le moyen 33 répartiteur.

De plus, les figures 4a, 4b et 4c illustrent des représentations logiques de quatre modes de réalisation du moyen 34 contrôleur de validité. D'autres procédés ou dispositifs peuvent être imaginés pour définir la réalisation dudit moyen 34, sans apporter pour autant de limitations à la présente invention.

Le moyen 34 contrôleur de validité peut être également partiellement ou intégralement réalisé sous la forme d'un logiciel, mis en oeuvre par l'unité de traitement (non représentée sur les figures 2, 4a, 4b, 4c) du module d'identité d'abonné 30.

L'invention s'applique en outre à tout système de diffusion (type Broadcast) pour lequel il est nécessaire de prévoir une extension gracieuse de période de validité du service.
Cette extension peut également être optionnelle et rendue opérationnelle seulement lors de la souscription de l'abonnement. L'extension de période de validité, permet toutefois d'améliorer le rendu de service auprès des abonnés.

## Revendications

1. Module d'identité (30) d'un abonné à un service de diffusion de programmes payants (1), ledit module étant destiné à être intégré ou mis en liaison avec un terminal (20), lesdits programmes étant diffusés (40) sous la forme d'au moins un message (EC) de contenu chiffré et d'au moins un message (STKM) de clé, ledit au moins un message de clé véhiculant notamment un marqueur temporel (TS) et une valeur encodée (XTEK) d'une clé de trafic (TEK) permettant audit terminal de déchiffrer lesdits messages (EC) de contenu chiffré,
ledit module comportant :
- une mémoire (31) pour mémoriser et délivrer conjointement une clé de service (SEK/PEK) et une période de validité (KV) associée à ladite clé de service;
- un moyen (32) décodeur de clé pour déduire, de la valeur encodée (XTEK) en utilisant ladite clé de service (SEK/PEK), la valeur de la clé de trafic (TEK) ;
- un moyen (34) de contrôle de validité pour délivrer au moyen (32) décodeur de clé, la clé de service (SEK / PEK) si, et seulement si, le marqueur temporel est compris dans la période de validité de ladite clé de service ;
- un moyen répartiteur (33) pour recevoir ledit au moins un message (STKM) de clé, extraire et transmettre notamment le marqueur temporel, la valeur (XTEK) encodée de la clé de trafic, respectivement au moyen (34) contrôleur de validité et au moyen (32) décodeur de clé ;
ledit module (30) d'identité d'abonné étant **caractérisé en ce que** :
- le moyen répartiteur (33) est adapté pour extraire et transmettre au moyen (34) contrôleur de validité, une information d'extension de période de validité (103, Ext), contenue dans ledit au moins un message (STKM) de clé, attestant que le programme est une extension de programme ;
- le moyen (34) contrôleur de validité est adapté pour interpréter ladite information d'extension de période de validité (103, Ext) et délivrer la clé de service (SEK / PEK) indépendamment de la valeur du marqueur temporel (100, TS) si, et seulement si, ladite information (103, Ext) atteste que le programme est une extension de programme.

2. Module selon la revendication 1 **caractérisé en ce que** :
- le moyen répartiteur (33) est adapté pour extraire et transmettre au moyen (34) contrôleur de validité, une valeur d'un marqueur temporel étendu (103, TSe), contenue dans ledit au moins un message (STKM) de clé;
- le moyen (34) contrôleur de validité est adapté pour délivrer la clé de service (SEK / PEK) si et seulement si :
i. la valeur du marqueur temporel étendu (103, TSe) est compris dans la période de validité de ladite clé de service (SEK / PEK) et ;
ii. une information d'extension de période de validité (103, Ext) est conjointement transmise avec la valeur dudit marqueur temporel étendu (103, TSe), au moyen (34) contrôleur de validité.

3. Module selon la revendication 1 **caractérisé en ce que** :
- le moyen répartiteur (33) est adapté pour extraire et transmettre au moyen (34) contrôleur de validité, une valeur d'une période de validité étendue (103, KVe), contenue dans ledit au moins un message (STKM) de clé;
- le moyen (34) contrôleur de validité est adapté pour délivrer la clé de service (SEK / PEK) si et seulement si :
i. la valeur du marqueur temporel (100, TS) est comprise dans la période de validité étendue (103, KVe) et;
ii. une information d'extension de période de validité (103, Ext) est conjointement transmise avec la valeur de ladite période de validité étendue (103, KVe), au moyen 34 contrôleur de validité.

4. Module selon la revendication 3 **caractérisé en ce que** :
- le moyen répartiteur (33) est adapté pour extraire et transmettre au moyen (34) contrôleur de validité, une valeur d'une période de validité initiale (103, KVi), contenue dans ledit au moins un message (STKM) de clé;
- le moyen (34) contrôleur de validité est adapté pour délivrer la clé de service (SEK / PEK) si et seulement si :
i. la valeur du marqueur temporel (100, TS) est comprise dans la période de validité étendue (103, KVe) et;
ii. une information d'extension de période de validité (103, Ext) est conjointement transmise avec la valeur de ladite période de validité étendue (103, KVe), au moyen 34 contrôleur de validité et;
iii. ladite période de validité intiale (103, KVi) est au moins comprise dans la période de validité (KV).

5. Terminal (20) pour visualiser un contenu diffusé (1) au moyen d'un réseau de diffusion (40) pour télévision mobile **caractérisé en qu'**il intègre un module d'identité selon l'une quelconque des revendications 1 à 4.

6. Serveur de programmes payants diffusés au moyen d'un réseau de diffusion (40) comprenant un moyen (11) encodeur d'un contenu sonore et/ou visuel (1) utilisant :
- une première clé de chiffrement pour chiffrer ledit contenu et délivrer au moins un message (EC) de contenu chiffré ;
- une seconde clé de chiffrement (SEK / PEK) pour chiffrer ladite première clé de chiffrement et délivrer au moins un message (STKM) de clé ;
**caractérisé en ce que** le moyen encodeur (11) ajoute, dans ledit au moins un message (STKM) de clé, une information d'extension de période de validité (Ext, 103) attestant que le programme diffusé est une extension de programme.

7. Serveur selon la revendication 6 **caractérisé en ce que** le moyen encodeur (11) ajoute, dans ledit au moins un message (STKM) de clé, une valeur d'un marqueur temporel étendu (103, TSe), si, et seulement si, ledit au moins un message (STKM) de clé comporte une information d'extension de période de validité (Ext, 103) attestant que le programme diffusé est une extension de programme et **en ce que** ladite valeur du marqueur temporel étendu est comprise dans une période de validité (KV) associée à la seconde clé de chiffrement (SEK / PEK).

8. Serveur selon la revendication 6 **caractérisé en ce que** le moyen encodeur (11) ajoute, dans ledit au moins un message (STKM) de clé, une période de validité étendue (103, KVe), si, et seulement si, ledit au moins un message (STKM) de clé comporte une information d'extension de période de validité (Ext, 103) attestant que le programme diffusé est une extension de programme et **en ce que** la valeur du marqueur temporel (100, TS) est comprise dans ladite période de validité étendue (KVe).

9. Serveur selon la revendication 8 **caractérisé en ce que** le moyen encodeur (11) ajoute, dans ledit au moins un message (STKM) de clé, une période de validité initiale (103, KVi), si, et seulement si, ledit au moins un message (STKM) de clé comporte une information d'extension de période de validité (Ext, 103) attestant que le programme diffusé est une extension de programme.
